(19) Europäisches Patentamt
European Patent Office
Office européen des brevets

(11) EP 3 320 014 B1

(12) **EUROPÄISCHE PATENTSCHRIFT**

(45) Veröffentlichungstag und Bekanntmachung des Hinweises auf die Patenterteilung:
**06.04.2022 Patentblatt 2022/14**

(21) Anmeldenummer: **16731589.4**

(22) Anmeldetag: **22.06.2016**

(51) Internationale Patentklassifikation (IPC):
***C08G 59/50*** $^{(2006.01)}$ ***C08G 59/56*** $^{(2006.01)}$
***C08G 59/58*** $^{(2006.01)}$

(52) Gemeinsame Patentklassifikation (CPC):
**C08G 59/56; C08G 59/50; C08G 59/58**

(86) Internationale Anmeldenummer:
**PCT/EP2016/064411**

(87) Internationale Veröffentlichungsnummer:
**WO 2017/005491 (12.01.2017 Gazette 2017/02)**

(54) **HÄRTBARE ZUSAMMENSETZUNGEN**

CURABLE COMPOSITIONS

COMPOSITIONS DURCISSABLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.07.2015 DE 102015212866**
**09.07.2015 US 201562190279 P**

(43) Veröffentlichungstag der Anmeldung:
**16.05.2018 Patentblatt 2018/20**

(73) Patentinhaber: **BASF SE**
**67056 Ludwigshafen am Rhein (DE)**

(72) Erfinder:
- **FLEISCHHAKER, Friederike**
**67065 Ludwigshafen (DE)**
- **MISSKE, Andrea**
**67346 Speyer (DE)**
- **FLECKENSTEIN, Christoph**
**63579 Freigericht-Somborn (DE)**
- **YU, Miran**
**67547 Worms (DE)**
- **KALLER, Martin**
**68199 Mannheim (DE)**
- **MEISENBURG, Uwe**
**68782 Bruehl (DE)**

(56) Entgegenhaltungen:
**EP-A2- 0 355 288 WO-A1-2012/148815**
**US-A- 5 981 627**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 320 014 B1

Printed by Jouve, 75001 PARIS (FR)

## Beschreibung

Die Erfindung betrifft eine härtbare Zusammensetzung, die wenigstens eine Epoxidverbindung mit mindestens zwei Epoxidgruppen; wenigstens ein Amin mit mindestens zwei Aminwasserstoffen und wenigstens einen Acrylsäureester enthält.

Die Amingruppen können mit den Epoxidgruppen (auch Oxirangruppen genannt) reagieren, um kovalente Bindungen zu bilden. Gehärtete Epoxidverbindungen sind aufgrund ihrer hervorragenden mechanischen und chemischen Eigenschaften, wie hohe Schlagzähigkeit, hohe Abriebfestigkeit, gute Chemikalienbeständigkeit, insbesondere eine hohe Beständigkeit gegenüber Laugen, Säuren, Ölen und organischen Lösungsmitteln, hohe Witterungsbeständigkeit, ausgezeichnete Haftfähigkeit auf vielen Werkstoffen und hohes elektrisches Isolationsvermögen, weit verbreitet.

Die oftmals hohe Viskosität von Epoxidverbindungen beschränkt häufig deren Anwendbarkeit und den Einsatz von Füllstoffen, welche zur Modifikation der mechanischen Eigenschaften der ausgehärteten Harzmasse verwendet werden können. Die Verwendung von Füllstoffen erlaubt in vielen Fällen außerdem eine Verringerung der Kosten der aus den Harzen gefertigten Produkte, wie beispielsweise Formteile oder Beschichtungen. Daher werden der ungehärteten Epoxidverbindung häufig Verdünnungsmittel zugesetzt, welche deren Viskosität auf den für die Anwendung gewünschten Wert verringern.

Die Gegenwart von nicht-reaktiven Verdünnern führt zum unerwünschten Ausdampfen organischer Lösungsmittel aus der gehärteten Epoxidverbindung. Es ist daher vorgeschlagen worden, Reaktivverdünner zur Viskositätserniedrigung einzusetzen. Reaktivverdünner sind Lösungsmittel, welche funktionelle Gruppen aufweisen, welche mit den Epoxidgruppen der Epoxidverbindung und/oder den funktionellen Gruppen des Härters unter Ausbildung kovalenter Bindungen reagieren.

Die EP 0 211 978 A1 beschreibt Copolymere, die erhältlich sind mittels Mischen einer ersten lösungsmittelfreien Komponente, die ein Mono-, Di- oder Polyamin enthält, mit einer zweiten Komponente, die ein di- oder polyfunktionelles Acrylat und ein Mono-, Di- oder Polyepoxid enthält. Es wird ausgeführt, dass die Acrylate nicht direkt mit den Epoxiden reagieren und eine Polymerisationsreaktion erst beim Vermischen mit einem Amin erfolgt. Mono-, Di- oder Polyacrylate sollen sich daher als Verdünner zur Verringerung der Viskosität der Epoxidverbindung eignen.

Die WO 2012/148815 A1 beschreibt härtbare Zusammensetzungen, welche ein Epoxidharz, ein Amin und ein polyfunktionelles Acrylat umfassen, die bestimmte Äquivalentgewichte aufweisen.

Die US 4,835,241 beschreibt Epoxidharz-Zusammensetzungen, welche das Reaktionsprodukt eines aromatischen Epoxidharzes, gemischt mit einem polyfunktionellen Acrylat, und einer zur Härtung ausreichenden Menge eines Polyetherpolyamins sind.

Die US 4,051,195 beschreibt härtbare Zusammensetzungen, die (1) ein Gemisch eines Epoxidharzes und eines polyfunktionellen (Meth)acrylats und (2) ein aliphatisches Polyamin umfassen. Die Aminogruppen des Polyamins können eine Michael-Addition mit den ethylenisch ungesättigten Gruppen des polyfunktionellen (Meth)acrylats eingehen.

Die EP 0 355 288 A2 beschreibt wässrige Zweikomponentensysteme auf Basis von Epoxiden und Diaminen unter Verwendung von polyfunktionellen Acrylaten, wobei die Aminkomponente sowohl mit der Epoxid- als auch der polyfunktionellen Acrylatkomponente reagiert.

Es wurde nun gefunden, dass Acrylsäureester vielfach nicht vollständig an der Polyadditionsreaktion teilnehmen. Nicht umgesetzter Acrylsäureester kann über längere Zeit aus der gehärteten Zusammensetzung ausdampfen, was aufgrund des reizenden und/oder toxischen Charakters der meisten Acrylsäureester unerwünscht ist. Die Mitverwendung von polyfunktionellen Acrylsäureestern in den bekannten härtbaren Zusammensetzungen kann außerdem zu Eigenschaftsveränderungen der erhaltenen Epoxidharze führen, da z. B. durch die polyfunktionellen Acrylsäureester zusätzliche Vernetzungsstellen in das wachsende Copolymer eingebaut werden.

Es war daher Aufgabe dieser Erfindung, eine härtbare Zusammensetzung bereitzustellen, die nach dem Aushärten im Wesentlichen kein Ausdampfen von Verdünnern zeigt. Die Materialeigenschaften der gehärteten Zusammensetzung sollen sich außerdem nicht zwingend wesentlich von gehärteten Zusammensetzungen ohne Reaktivverdünner unterscheiden.

Die Aufgabe wird gelöst durch eine härtbare Zusammensetzung, die umfasst

a) wenigstens eine Epoxidverbindung E mit mindestens zwei Epoxidgruppen;
b) wenigstens ein Amin A mit mindestens zwei Aminwasserstoffen; und
c) wenigstens einen Acrylsäureester U;

und dadurch gekennzeichnet ist, dass die Epoxidverbindung E wenigstens eine Epoxidverbindung E', das Amin A wenigstens ein Amin A' und der Acrylsäureester U wenigstens einen monofunktionellen Acrylsäureester U' umfassen, deren Hansen-Löslichkeitsparameter bei 23°C für die Dipolkräfte $\delta_p$ und für die spezifischen Interaktionen $\delta_h$ folgenden Bedingungen genügen:

$$\sqrt{\left(\delta_{p(U')} - \delta_{p(E')}\right)^2 + \left(\delta_{h(U')} - \delta_{h(E')}\right)^2} = \Phi_1$$

$$\Phi_1 \geq 1{,}5$$

und

$$\sqrt{(\delta_{p(U')}{}^2 + \delta_{h(U')}{}^2)} - \sqrt{(\delta_{p(A')}{}^2 + \delta_{h(A')}{}^2)} = \Phi_2$$

$\Phi_2 \geq$ Z 0, wobei der Begriff "monofunktionell" derart zu verstehen ist, dass der Acrylsäureester nur eine Acrylatgruppe (H2C=CH-COO-) aufweist.

Vorzugsweise gilt $\Phi_1 \geq 2{,}0$ und insbesondere $\Phi_1 \geq 2{,}5$. Weiterhin gilt vorzugsweise $\Phi_2 \geq 0{,}3$ und insbesondere $\Phi_2 \geq 0{,}6$.

Neben einer oder mehreren Epoxidverbindungen E', die den vorstehenden Bedingungen genügen, kann die Epoxidverbindung E eine oder mehrere Epoxidverbindungen enthalten, die den vorstehenden Bedingungen nicht genügen. Vorzugsweise besteht die Epoxidverbindung E zu mindestens 60 Gew.-% (bezogen auf die Gesamtmenge an Epoxidverbindung E) aus E', insbesondere vollständig aus E'.

Neben einem oder mehreren Aminen A', die den vorstehenden Bedingungen genügen, kann das Amin ein oder mehrere Amine enthalten, die den vorstehenden Bedingungen nicht genügen. Vorzugsweise besteht das Amin A zu mindestens 60 Gew.-% (bezogen auf die Gesamtmenge an Amin A) aus A', insbesondere vollständig aus A'.

Neben einem oder mehreren monofunktionellen Acrylsäureestern U', die den vorstehenden Bedingungen genügen, kann der Acrylsäureester einen oder mehrere Acrylsäureester enthalten, die den vorstehenden Bedingungen nicht genügen. Vorzugsweise besteht der Acrylsäureester U zu mindestens 60 Gew.-% (bezogen auf die Gesamtmenge an Acrylsäureester U) aus U', insbesondere vollständig aus U'.

Das Verhältnis der Stoffmenge der Epoxidgruppen und Acrylsäureestergruppen zur Stoffmenge von Aminwasserstoffen liegt vorzugsweise im Bereich von 0,05 bis 2,0, insbesondere im Bereich von 0,1 bis 1,0.

Das Gewichtsverhältnis der Epoxidverbindung E zum Acrylsäureester U liegt im Allgemeinen im Bereich von 3 bis 15, bevorzugt im Bereich von 5 bis 12 und besonders bevorzugt im Bereich von 7 bis 10.

Das Amin A umfasst mindestens zwei Aminwasserstoffe. Als Aminwasserstoff wird ein direkt an ein Stickstoffatom einer Aminogruppe gebundenes Wasserstoffatom bezeichnet. Bekanntlich trägt eine primäre Aminogruppe zwei Aminwasserstoffe bei, eine sekundäre Aminogruppe ein Aminwasserstoff. Das Amin A enthält demnach wenigstens eine primäre Aminogruppe oder wenigstens zwei sekundäre Aminogruppen oder beliebige Kombinationen von primären und sekundären Aminogruppen. Vorzugsweise stammen wenigstens 50% der Aminwasserstoffe aus primären Aminogruppen.

Es wurde gefunden, dass durch geeignete Wahl der Hansen-Löslichkeitsparameter der Bestandteile gewährleistet wird, dass die Aminwasserstoffe bevorzugt mit den verfügbaren Acrylatgruppen im Sinne einer Michael-Addition reagieren. Die übrigen Aminwasserstoffe reagieren mit den verfügbaren Epoxidgruppen. Hierdurch wird die Härtung der Zusammensetzung bewirkt. Der Acrylsäureester wird kovalent in das aushärtende Material eingebunden. Dies verhindert ein nachträgliches Ausdampfen des Verdünners.

Die Definition und die Berechnung der Löslichkeitsparameter im dreidimensionalen Hansen-Löslichkeitsraum sind in C. M. Hansen: "The three dimensional solubility parameters" J. Paint Technol. 39, 105 (1967) beschrieben. Dabei kennzeichnet $\delta_d$ die LONDON-Dispersionskräfte, kennzeichnet $\delta_p$ die Debye-Interaktionskräfte zwischen permanenten Dipolen sowie die Keesom-Interaktionskräfte zwischen induzierten und permanenten Dipolen, und kennzeichnet $\delta_h$ die spezifischen Interaktionskräfte (Wasserstoffbrückenbindungen, Säure/Base, Donator/Akzeptor usw.). Die Einheit der Hansen-Löslichkeitsparameter der Parameter ist $(MPa)^{1/2}$.

Die Hansen-Löslichkeitsparameter für viele Verbindungen sind in Standardwerken tabelliert, wie Hansen Solubility Parameters: A User's Handbook, C. M. Hansen, 2007, 2nd Edition. Es kann auch bekannte Modellier-Software, wie beispielsweise HSPIP 3.1.25 (3rd Edition), entwickelt und vertrieben von C. M. Hansen, verwendet werden, um die Hansen-Löslichkeitsparameter auf Basis der chemischen Struktur der Verbindung zu berechnen. Die hier verwendeten Hansen-Löslichkeitsparameter beziehen sich auf Raumtemperatur, etwa 23 °C.

Genügen die Hansen-Löslichkeitsparameter den genannten Bedingungen nicht, so ist die Reaktivität zwischen den Bestandteilen der härtbaren Zusammensetzung nicht optimal. So könnte es zu einer ungenügenden kovalenten Einbindung des Acrylsäureesters während der Aushärtung der Zusammensetzung kommen, was zu einem nachträglichen Ausdampfen des Acrylsäureesters aus der gehärteten Zusammensetzung führen könnte.

Die härtbare Zusammensetzung umfasst wenigstens eine Epoxidverbindung mit mindestens 2 Epoxidgruppen, beispielsweise 2 bis 10 Epoxidgruppen. Bevorzugt umfasst die Epoxidverbindung 2 bis 5 Epoxidgruppen, besonders

bevorzugt 2 Epoxidgruppen. Allgemein liegt das Epoxidäquivalentgewicht im Bereich von etwa 120 bis etwa 3.000 g/Äquivalent, bevorzugt im Bereich von etwa 120 bis etwa 1.000 g/ Äquivalent, besonders bevorzugt im Bereich von etwa 120 bis etwa 200 g/Äquivalent. Das Epoxidäquivalentgewicht ist definiert als das durchschnittliche Molekulargewicht der Epoxidverbindung, geteilt durch die durchschnittliche Anzahl an Epoxidgruppen pro Molekül.

Die Epoxidverbindung kann außerdem weitere funktionelle Gruppen, beispielsweise Hydroxylgruppen, Halogene und Ethergruppen umfassen. Die Epoxidverbindung kann gesättigt oder ungesättigt, cyclisch oder acyclisch, aliphatisch, alicyclisch, aromatisch oder heterocyclisch sein.

Als Epoxidverbindungen in Betracht kommen monomere Epoxidverbindungen oder oligomere Epoxidverbindungen mit mehr als einer Epoxid-Gruppe pro Mol, die auch als Präpolymere oder Epoxidharze angesprochen werden.

Bei den Epoxidharzen kann es sich um Flüssigharze, um Festharze oder um Mischungen davon handeln. Flüssigharze unterscheiden sich von Festharzen durch ihre geringere Viskosität. Zudem weisen Flüssigharze in der Regel einen höheren Anteil an Epoxidgruppen und ein entsprechend niedrigeres Epoxidäquivalent auf.

Der Gehalt an Epoxidgruppen in typischen Flüssigharzen liegt üblicherweise im Bereich von 120 bis 200 g/Äquivalent und der der Festharze im Bereich von 450 bis 3.000 g/Äquivalent, gerechnet als Epoxidäquivalent gemäß DIN 16945.

Die Viskosität der Flüssigharze liegt bei 25 °C üblicherweise im Bereich von 1 bis 20 Pas, bevorzugt im Bereich von 5 bis 15 Pas. Die Viskosität der der Festharze liegt bei 25 °C üblicherweise im Bereich 5 bis 40 Pas, bevorzugt im Bereich von 20 bis 40 Pas. Die hier angegebenen Viskositäten sind die gemäß DIN 53015 bei 25 °C als 40%ige Lösungen der Harze in Methylethylketon bestimmten Werte.

In einer bevorzugten Ausführungsform ist die Epoxidverbindung ausgewählt unter Glycidylethern, beispielsweise aromatischen, aliphatischen und cycloaliphatischen Glycidylethern, die z. B. durch Veretherung aromatischer, aliphatischer oder cycloaliphatischer Polyole mit einem Epihalohydrin (wie Epichlorhydrin oder Epibromhydrin) hergestellt werden.

In einer bevorzugten Ausführungsform ist die Epoxidverbindung ausgewählt unter aromatischen Glycidylethern, beispielsweise Polyglycidethern aromatischer Polyole. Beispiele hierfür sind die vom Diglycidylether des Bisphenols A abgeleiteten Epoxidverbindungen (R' = $CH_3$), die vom Bisphenol F abgeleiteten Epoxidverbindungen (R' = H) und die vom Bisphenol S abgeleiteten Epoxidverbindungen (R' = $SO_2$), welche sich durch die folgende allgemeine Formel beschreiben lassen:

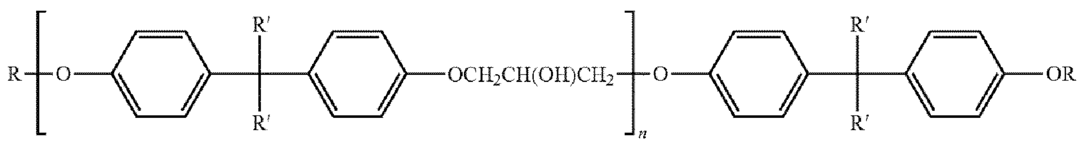

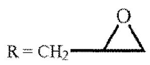

R' = H, $CH_3$, $SO_2$

In der Formel gibt der Parameter n die Anzahl der Wiederholungseinheiten an, wobei der Mittelwert von n mit dem jeweiligen mittleren Molekulargewicht korrespondiert.

Besonders bevorzugt sind die vom Diglycidylether des Bisphenols A abgeleiteten Epoxidverbindungen (R' = $CH_3$), wobei n im Bereich von 0 bis 10, insbesondere 0 bis 5 liegt. Ganz besonders bevorzugt ist n = 0. Die Epoxidverbindung ist dann Bisphenol-A-diglycidylether.

Beispiele für Epoxidverbindungen auf Basis von aromatischen Glycidylethern sind weiterhin Glycidylether von Phenol- und Kresol-basierten Novolaken. Novolake werden durch die säurekatalysierte Kondensation von Formaldehyd und Phenol oder Kresol hergestellt. Durch Umsetzung der Novolake mit Epichlorhydrin erhält man die Glycidylether der Novolake.

In einer weiteren bevorzugten Ausführungsform ist die Epoxidverbindung ausgewählt unter aliphatischen Glycidylethern, beispielsweise Polyglycidylethern aliphatischer Polyole. Beispiele solcher Polyole sind Alkanole wie Alkandiole, Alkantriole, Alkantetraole Alkanpentaole, Alkanhexaole sowie Disaccharide, wie z.B. Glycerin, Trimethylolpropan, Trimethylolethan, Diglycerin, Sorbit, Mannit, Pentaerythrit, Dipentaerythrit, Sucrose, Fructose, 1,2,6-Hexantriol, Glucose, Lactose und Maltose.

In einer weiteren bevorzugten Ausführungsform ist die Epoxidverbindung ausgewählt unter cycloaliphatischen Glycidylethern, beispielsweise Polylycidylethern cycloaliphatischer Polyole. Beispiele für Polyglycidylether von cycloaliphatischen Polyolen sind die Kernhydrierungsprodukte von Polyglycidylethern auf Basis von Bisphenol-A, die Kernhydrierungsprodukte von Polyglycidylethern auf Basis von Bisphenol-F, die Kernhydrierungsprodukte von Polyglycidylethern auf Basis von Novolaken und deren Gemische. Derartige Verbindungen werden üblicherweise durch selektive

Hydrierung der aromatischen Ringe in den zuvor genannten aromatischen Polyglycidylethern hergestellt. Beispiele für solche Produkte sind das P 22-00 der Fa. LeunaHarze und Eponex 1510 der Fa. Hexion.

In einer weiteren bevorzugten Ausführungsform ist die Epoxidverbindung ausgewählt unter Glycidylestern, beispielsweise aromatischen, aliphatischen und cycloaliphatischen Glycidylestern, wie Polyglycidylester von Polycarbonsäuren. Die Glycidylester werden beispielsweise durch Glycidylierung der Polycarbonsäuren mit einem Epihalohydrin (wie Epichlorhydrin oder Epibromhydrin) hergestellt. Solche Polyglycidylester können von aliphatischen Polycarbonsäuren, z.B. Oxalsäure, Bernsteinsäure, Glutarsäure, Adipinsäure, Pimelinsäure, Suberinsäure, Azelainsäure, Sebacinsäure, dimersisierter oder trimerisierter Linolsäure, von cycloaliphatischen Polycarbonsäure, wie Tetrahydrophthalsäure, 4-Methyltetrahydrophthalsaure, Hexahydrophthalsäure und 4-Methylhexahydrophthalsäure, oder von aromatischen Polycarbonsäuren, wie Phthalsäure, Isophthalsäure und Terephthalsäure, abgeleitet sein. Die Glycidylester sind beispielsweise ausgewählt unter Hexahydrophthalsäurediglycidylester, Tetrahydrophthalsäurediglycidylester und Fumarsäurediglycidylester.

In einer weiteren bevorzugten Ausführungsform ist die Epoxidverbindung ausgewählt unter Divinylarendioxiden. Geeignete Divinylarendioxide umfassen substituierte oder nicht-substituierte Arene, die zwei Vinylgruppen in beliebigen Positionen am Ring tragen. Der Aren-Anteil der Divinylarendioxide ist beispielsweise ausgewählt unter Benzol, substituierten Benzolen, ring-anellierten Benzolen, homolog verbundenen (substituierten) Benzolen oder Gemischen davon. Ring-anellierte Benzole sind beispielsweise Naphthalin und Tetrahydronaphthalin. Homolog verbundene (substituierte) Benzole sind beispielsweise Biphenyl und Diphenylether. Die Vinylgruppen können in ortho-, meta- oder para-Stellung gebunden sein. Weitere Substituenten sind beispielsweise ausgewählt unter $C_1$-$C_{10}$-Alkylen, Arylen, Halogenen, $NO_2$, Cyanat, Isocyanat oder RO-(wobei R ein $C_1$-$C_{10}$-Alkyl oder ein Aryl ist).

Bevorzugt ist das Divinylarendioxid ausgewählt unter ortho-Divinylbenzoldioxid, meta-Divinylbenzoldioxid und para-Divinylbenzoldioxid. Besonders bevorzugt ist das Divinylarendioxid ausgewählt unter meta- Divinylbenzoldioxid und para-Divinylbenzoldioxid.

Als Epoxidverbindungen, insbesondere für härtbare Zusammensetzungen für Lackformulierungen, sind auch epoxidgruppenhaltige Polyacrylatharze geeignet. Diese werden in der Regel durch Copolymerisation von mindestens einem ethylenisch ungesättigten Monomer, das mindestens eine Epoxidgruppe, insbesondere in Form einer Glycidylethergruppe, im Molekül enthält, mit mindestens einem weiteren ethylenisch ungesättigten Monomer, das keine Epoxidgruppe im Molekül enthält, hergestellt, wobei vorzugsweise wenigstens eines der Comonomere ein Ester der Acrylsäure oder Methacrylsäure ist.

Beispiele für die ethylenisch ungesättigten Monomere, die mindestens eine Epoxid-gruppe im Molekül enthalten, sind Glycidylacrylat, Glycidylmethacrylat und Allylglycidylether. Beispiele für ethylenisch ungesättigte Monomere, die keine Epoxidgruppe im Molekül enthalten, sind Alkylester der Acryl und Methacrylsäure, die 1 bis 20 Kohlenstoffatome im Alkylrest enthalten, insbesondere Methylacrylat, Methylmethacrylat, Ethylacrylat, Ethylmethacrylat, Butylacrylat, Butylmethacrylat, 2-Ethylhexylacrylat und 2-Ethylhexylmethacrylat. Weitere Beispiele für ethylenisch ungesättigte Monomere, die keine Epoxidgruppen im Molekül enthalten, sind Säuren, wie z. B. Acrylsäure und Methacrylsäure. Säureamide, wie z. B. Acrylsäure- und Methacrylsäureamid, vinylaromatische Verbindungen, wie Styrol, Methylstyrol und Vinyltoluol, Nitrile, wie Acrylnitril und Methacrylnitril, Vinyl- und Vinylidenhalogenide, wie Vinylchlorid und Vinylidenfluorid, Vinylester, wie z. B. Vinylacetat und hydroxylgruppenhaltige Monomere, wie z. B. Hydroxyethylacrylat und Hydroxyethylmethacrylat.

Das epoxidgruppenhaltige Polyacrylatharz weist üblicherweise ein Epoxidäquivalentgewicht von 400 bis 2.500, vorzugsweise 500 bis 1.500, besonders bevorzugt 600 bis 1.200 auf. Das zahlenmittlere Molekulargewicht (gelpermeationschromatographisch unter Verwendung eines Polystyrolstandards bestimmt) liegt typischerweise im Bereich von 1.000 bis 15.000, vorzugsweise von 1.200 bis 7.000, besonders bevorzugt von 1.500 bis 5.000. Die Glasübergangstemperatur ($T_g$) liegt typischerweise im Bereich von 30 bis 80 °C, vorzugsweise von 40 bis 70 °C, besonders bevorzugt von 50 bis 70 °C (gemessen mit Hilfe der Differentialkalorimetrie (DSC)). Epoxidgruppenhaltige Polyacrylatharze sind bekannt (vgl. z. B. EP-A-299 420, DE-B-22 14 650, DE-B-27 49 576, US-A-4,091,048 und US-A-3,781,379). Beispiele für solche Harze sind Epon 8021, Epon 8111, Epon 8161 der Fa. Hexion.

Die Epoxidverbindungen können sich auch von anderen Epoxiden ableiten (Nichtglycidylether-Epoxidverbindungen). Hierzu zählen insbesondere Verbindungen, einschließlich Oligomeren und Polymeren, die wenigstens eine, insbesondere mehrere epoxidierte cycloaliphatische Gruppen, insbesondere 7-Oxabicyclo-[4.1.0]-heptyl-Gruppen aufweisen, die durch Epoxidierung von Verbindungen mit Cyclohexenylgruppen erhältlich sind. Beispiele für die Epoxidierungsprodukte von Verbindungen mit wenigstens einer cycloolefinischen Gruppe sind 4-Epoxyethyl-1,2-epoxy-cyclohexan und die Verbindung der folgenden Formel:

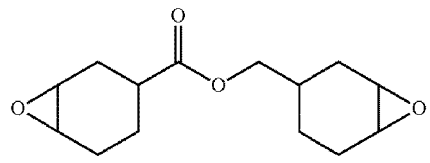

(CAS-Nr. 2386-87-0)

die beispielsweise von der Fa. Cytec unter der Bezeichnung Uvacure 1500 vertrieben wird. Bevorzugt werden die Verbindungen eingesetzt, die wenigstens eine, insbesondere mehrere epoxidierte cycloaliphatische Gruppen, insbesondere 7-Oxabicyclo-[4.1.0]-heptyl-Gruppen aufweisen, die durch Epoxidierung von Verbindungen mit Cyclohexenylgruppen erhältlich sind, und deren Oligomere, nicht alleine sondern in Kombination mit einer oder mehrerer der vorgenannten Substanzen, die wenigstens zwei Glycidylethergruppen im Molekül aufweisen.

Weitere geeignete Epoxidverbindungen sind beispielsweise die Epoxidharze, die im Handel unter den Markenbezeichnungen EPILOX®, EPONEX®, EPIKOTE®, EPONOL®, D.E.R, ARALDIT® oder ARACAST® erhältlich sind.

Die Epoxidverbindung ist bevorzugt ausgewählt unter Glycidylethern, Glycidylestern und Divinylarendioxiden. Besonders bevorzugt ist die Epoxidverbindung ausgewählt unter aromatischen, aliphatischen oder cycloaliphatischen Glycidylethern, ganz besonders bevorzugt aromatischen Glycidylethern. Am bevorzugtesten ist die Epoxidverbindung Bisphenol-A-diglycidylether.

Die härtbare Zusammensetzung umfasst wenigstens ein Amin mit mindestens zwei Aminwasserstoffen. Um eine im Wesentlichen vollständige Härtung der Zusammensetzung und eine möglichst vollständige kovalente Einbindung des Acrylsäureesters in diese zu erreichen, liegt das Verhältnis der Stoffmenge der Epoxidgruppen und Acrylsäureestergruppen zur Stoffmenge von Aminwasserstoffen vorzugsweise im Bereich von 0,05 bis 2,0, insbesondere im Bereich von 0,1 bis 1,0.

Bevorzugt ist das Amin ausgewählt unter aromatischen, aliphatischen oder cycloaliphatischen Aminen, welche mindestens zwei Aminogruppen, welche primär und/oder sekundär sind, aufweisen. Das Amin kann weitere funktionelle Gruppen, beispielsweise Hydroxylgruppen, Halogene und Ethergruppen umfassen.

Geeignete Amine A sind beispielsweise

aliphatische Polyamine wie Ethylendiamin, 1,2- und 1,3-Propandiamin, Neopentandiamin, Hexamethylendiamin, Octamethylendiamin, 1,10-Diaminodecan, 1,12-Diaminododecan, Diethylentriamin, Triethylentetramin, Tetraethylenpentamin, Trimethylhexamethylendiamin, 1-(3-Aminopropyl)-3-aminopropan, 1,3-Bis-(3-aminopropyl) propan und 4-Ethyl-4-methyl-amino-1-octylamin;

cycloaliphatische Diamine, wie 1,2-Diaminocyclohexan, 1,3-Bis(aminomethyl)cyclohexan, 1-Methyl-2,4-diaminocyclohexan, 4-(2-Aminopropan-2-yl)-1-methylcyclohexan-1-amin, Isophorondiamin, 4,4'-Diaminodicyclohexylmethan, 3,3'-Dimethyl-4,4'-diaminodicyclo-hexylmethan, 4,8-Diamino-tricyclo[5.2.1.0]decan, Norbornandiamin, Menthandiamin und Menthendiamin; bevorzugt Isophorondiamin;

aromatische Diamine, wie Toluylendiamin, Xylylendiamin, insbesondere meta-Xylylendiamin, Bis(4-aminophenyl)methan (MDA oder Methylendianilin) und Bis(4-aminophenyl)sulfon (auch als DADS, DDS oder Dapson bekannt;

cyclische Polyamine, wie Piperazin und N-Aminoethylpiperazin;

Polyetheramine, insbesondere difunktionelle und trifunktionelle primäre Polyetheramine auf der Basis von Polypropylenglycol, Polyethylenglycol, Polybutylenoxid, Poly-(1,4-butan-diol), Poly-THF oder Polypentylenoxid, z.B. 4,7,10-Trioxatridecan-1,3-diamin, 4,7,10-Trioxatridecan-1,13-diamin, 1,8-Diamino-3,6-dioxaoctan (XTJ-504 von Huntsman), 1,10-Diamino-4,7-dioxadecan (XTJ-590 von Huntsman), 1,12-Diamino-4,9-dioxadodecan (BASF SE), 1,3-Diamino-4,7,10-trioxatridecan (BASF), primäre Polyetheramine auf der Basis von Polypropylenglycol mit einer mittleren Molmasse von 230 wie z. B. Polyetheramine D 230 (BASF SE) oder Jeffamine® D 230 (Huntsman), difunktionelle, primäre Polyetheramine auf der Basis von Polypropylenglycol mit einer mittleren Molmasse von 400, z. B. Polyetheramine D 400 (BASF SE) oder Jeffamine® XTJ 582 (Huntsman), difunktionelle, primäre Polyetheramine auf Basis von Polypropylenglycol mit einer mittleren Molmasse von 2000 wie z. B. Polyetheramine D 2000 (BASF SE), Jeffamine® D2000 oder Jeffamine® XTJ 578 (Huntsman), difunktionelle, primäre Polyetheramine auf der Basis

von Propylenoxid mit einer mittleren Molmasse von 4000 wie z. B. Polyetheramin D 4000 (BASF SE), trifunktionelle, primäre Polyetheramine hergestellt durch Reaktion von Propylenoxid mit Trimethylolpropan gefolgt durch eine Aminierung der endständigen OH-Gruppen mit einer mittleren Molmasse von 403 wie z. B. Polyetheramine T 403 (BASF SE) oder Jeffamine® T 403 (Huntsman), trifunktionelle, primären Polyetheramin hergestellt durch Reaktion von Propylenoxid mit Glycerin gefolgt durch eine Aminierung der endständigen OH-Gruppen mit einer mittleren Molmasse von 5000 wie z. B. Polyetheramine T 5000 (BASF SE) oder Jeffamine® T 5000 (Huntsman), aliphatische Polyetheramine, die aus einem mit Propylenoxid gepfropftem Polyethylenglycol aufgebaut sind und eine mittlere Molmasse von 600 aufweisen, wie z. B. Jeffamine® ED-600 bzw. Jeffamine® XTJ 501 (jeweils Huntsman), aliphatische Polyetheramine, die aus einem mit Propylenoxid gepfropftem Polyethylenglycol aufgebaut sind und eine mittlere Molmasse von 900 aufweisen, wie z. B. Jeffamine® ED-900 (Huntsman), aliphatische Polyetheramine, die aus einem mit Propylenoxid gepfropftem Polyethylenglycol aufgebaut sind und eine mittlere Molmasse von 2000 aufweisen, wie z. B. Jeffamine® ED-2003 (Huntsman), difunktionelle, primäre Polyetheramine, hergestellt durch Aminierung eines mit Propylenoxid gepfropften Diethylenglycols mit einer mittleren Molmasse von 220, wie z. B. Jeffamine® HK-511 (Huntsman), aliphatische Polyetheramine auf der Basis eines Copolymers aus Poly(tetramethylenetherglycol) und Polypropylenglycol mit einer mittleren Molmasse von 1000 wie z. B. Jeffamine® XTJ-542 (Huntsman), aliphatische Polyetheramine auf der Basis eines Copolymers aus Poly(tetra-methylenetherglycol) und Polypropylenglycol mit einer mittleren Molmasse von 1900 wie z. B. Jeffamine® XTJ-548 (Huntsman), aliphatische Polyetheramine auf der Basis eines Copolymers aus Poly(tetramethylenetherglycol) und Polypropylenglycol mit einer mittleren Molmasse von 1400 wie z. B. Jeffamine® XTJ-559 (Huntsman), Polyethertriamine auf der Basis eines mit Butylenoxid gepfropftem mindestens dreiwertigen Alkohols mit einer mittleren Molmasse von 400, wie z. B. Jeffamine® XTJ-566 (Huntsman), aliphatische Polyetheramine, hergestellt durch Aminierung von mit Butylenoxid aufgepfropften Alkoholen mit einer mittleren Molmasse von 219, wie z. B. Jeffamine® XTJ-568 (Huntsman), Polyetheramine auf der Basis von Pentaerythrit und Propylenoxid mit einer mittleren Molmasse von 600 wie z. B. Jeffamine® XTJ- 616 (Huntsman), Polyetheramine auf der Basis von Triethylenglycol mit einer mittleren Molmasse von 148, z. B. Jeffamine® EDR-148 (Huntsman), difunktionelle, primäre Polyetheramine, hergestellt durch Aminierung eines mit Propylenoxid gepfropften Ethylenglycols, mit einer mittleren Molmasse von 176, wie z. B. Jeffamine® EDR-176 (Huntsman), sowie Polyetheramine, hergestellt durch Aminierung von PolyTHF mit einer mittleren Mollmasse von 250, z. B. PolyTHF-Amin 350 (BASF SE), und Mischungen dieser Amine;

Polyamidoamine (Amidopolyamine), die durch die Reaktion von Polycarbonsäuren, insbesondere Dicarbonsäuren wie Adipinsäure oder dimeren Fettsäuren (z. B. dimere Linolsäure) mit niedermolekularen Polyaminen, wie Diethylentriamin, 1-(3-Aminopropyl)-3-aminopropan oder Triethylentetramin oder anderen Diaminen wie die zuvor genannten aliphatischen oder cycloaliphatischen Diamine, erhältlich sind oder alternativ durch Michael-Addition von Diaminen an Acrylsäureester und anschließende Polykondensation der erhaltenen Aminosäureester erhältlich sind; oder

Phenalkamine (auch Phenolalkanamine), worunter Phenol oder Phenolderivate verstanden werden, welche an mindestens einem C-Atom des Ringsystems durch Kohlenwasserstoffgruppen substituiert sind, welche primäre oder sekundäre Aminogruppen enthalten; abgesehen von der Hydroxylgruppe des Phenols oder Phenolderivats und den primären oder sekundären Aminogruppen enthalten die Phenalkamine keine weiteren funktionellen Gruppen. Insbesondere enthalten die Phenalkamine sowohl primäre als auch sekundäre Aminogruppen. Gut geeignete Phenalkamine enthalten vorzugsweise insgesamt 2 bis 10, insbesondere 2 bis 8 und in einer besondere Ausführungsform 4 bis 6 derartiger Aminogruppen; bevorzugt handelt sind es sich um Phenalkamine auf Basis von Cardanol, welches im Cashew-Schalenöl enthalten ist; auf Cardanol basierende Phenalkamine sind an mindestens einem, vorzugsweise an ein bis drei C-Atomen des Ringsystems durch vorstehend beschriebene, primäre oder sekundäre Aminogruppen enthaltende, vorzugsweise aliphatische Kohlenwasserstoffgruppen substituiert. Insbesondere finden sich diese Substituenten in ortho- oder para-Stellung zur Hydroxylgruppe; Phenalkamine können durch Mannich-Reaktion aus dem Phenol oder Phenolderivat, einem Aldehyd, und einer Verbindung mit mindestens einer primären oder sekundären Aminogruppe hergestellt werden. Bei den Phenalkaminen handelt es sich daher um Mannich-Basen oder Addukte von Aminoverbindungen, insbesondere einer der vorstehenden Aminoverbindungen an Epoxidverbindungen, sowie Mischungen der vorgenannten Aminhärter.

Besonders bevorzugt ist das Amin ein cycloaliphatisches Diamin. Ganz besonders bevorzugt ist das Amin Isophorondiamin.

Die härtbare Zusammensetzung umfasst mindestens einen monofunktionellen Acrylsäureester U'. Der Acrylsäureester reagiert mit dem Amin in einer Michael-Addition und wird so kovalent in das aushärtende Material eingebunden. Unter dem Begriff "monofunktionell" wird hier verstanden, dass der Acrylsäureester nur eine Acrylatgruppe ($H_2C{=}CH{-}COO{\sim}$) aufweist. Unter dem Begriff "polyfunktionell" wird hier verstanden, dass der Acrylsäureester mindestens

zwei Acrylatgruppen ($H_2C$=CH-COO~) aufweist.

Neben einem oder mehreren monofunktionellen Acrylsäureestern U', die den erfindungsgemäßen Bedingungen genügen, kann der Acrylsäureester U einen oder mehrere Acrylsäureester enthalten, die den erfindungsgemäßen Bedingungen nicht genügen.

In bestimmten Ausführungsformen beträgt der Anteil an polyfunktionellen Acrylsäureestern in der härtbaren Verbindung weniger als 10 Gew.-%, bezogen auf das Gesamtgewicht der härtbaren Verbindung. Bevorzugt beträgt der Anteil an polyfunktionellen Acrylsäureestern in der härtbaren Verbindung weniger als 5 Gew.-%, besonders bevorzugt weniger als 2 Gew.-%. Ganz besonders bevorzugt enthält die härtbare Verbindung im Wesentlichen keinen polyfunktionellen Acrylsäureester.

Der Acrylsäureester kann neben der Acrylatgruppe weitere funktionelle Gruppen umfassen, um den an die Hansen-Löslichkeitsparameter gestellten Bedingungen zu genügen. Bevorzugt umfasst der Acrylsäureester mindestens eine Hydroxylgruppe, mindestens eine Ethergruppe, mindestens eine Alkyloxycarbonylgruppe, mindestens eine Amidgruppe und/oder mindestens eine Amingruppe.

In einer bevorzugten Ausführungsform ist der Acrylsäureester ausgewählt unter Hydroxyalkylacrylsäureestern, Alkylesteracrylsäureestern, Hydroxyalkylesteracrylsäureestern und Polyalkyletheracrylsäureestern. Besonders bevorzugt ist der Acrylsäureester ausgewählt unter 4-Hydroxybutylacrylat, Hydroxyethylcaprolactonacrylat und Ethyldiglycolacrylat.

In einer bevorzugten Ausführungsform ist die Epoxidverbindung E' Bisphenol-A-diglycidylether, ist das Amin A' Isophorondiamin und ist der Acrylsäureester U' ausgewählt unter 4-Hydroxybutylacrylat, Hydroxyethylcaprolactonacrylat und Ethyldiglycolacrylat, besonders bevorzugt unter 4-Hydroxybutylacrylat und Hydroxyethylcaprolactonacrylat. Ganz besonders bevorzugt ist die Epoxidverbindung E' Bisphenol-A-diglycidylether, ist das Amin A' Isophorondiamin und ist der Acrylsäureester U' 4-Hydroxybutylacrylat.

Die härtbare Zusammensetzung kann außerdem inerte organische Lösungsmittel als Verdünner enthalten. Hierunter versteht man organische Lösungsmittel, die bei Normaldruck einen Siedepunkt unterhalb 200 °C aufweisen und die mit den funktionellen Gruppen der in der Zusammensetzung enthaltenen Bestandteile keine Reaktion unter Bindungsbildung eingehen.

Derartige Lösungsmittel sind typischerweise organische Lösungsmittel, beispielsweise Ketone mit vorzugsweise 3 bis 8 C-Atomen wie Aceton, Methylethylketon und Cyclohexanon, Ester aliphatischer Carbonsäuren, vorzugsweise der Essigsäure, der Propionsäure oder der Butansäure, insbesondere die $C_1$-$C_6$-Alkylester dieser Säuren wie Ethylacetat, Propylacetat und Butylacetat, aromatische Kohlenwasserstoffe, insbesondere Alkylaromaten wie beispielsweise Toluol, Mesitylen, 1,2,4-Trimethylbenzol, n-Propylbenzol, Isopropylbenzol, Cumol, oder Xylole und Mischungen von Alkylaromaten, insbesondere technische Gemische, wie sie beispielsweise als Solvessomarken im Handel erhältlich sind, aliphatische und cycloaliphatische Kohlenwasserstoffe sowie Alkanole mit vorzugsweise 1 bis 8 C-Atomen und Cycloalkanole mit vorzugsweise 5 bis 8 C-Atomen wie Methanol, Ethanol, n- und Isopropanol, Butanole, Hexanole, Cyclopentanol und Cyclohexanol.

Die Verwendung derartiger inerter organischer Lösungsmittel bewirkt in der Regel allerdings, dass diese während und nach der Härtung aus der Zusammensetzung ausdampfen, was aus ökologischer und gesundheitlicher Sicht unerwünscht sein kann.

In einer bevorzugten Ausführungsform enthält die härtbare Zusammensetzung daher weniger als 10 Gew.-% inerte organische Lösungsmittel, besonders bevorzugt weniger als 5 Gew.-%, ganz besonders bevorzugt weniger als 1 Gew.-%, bezogen auf das Gewicht der härtbaren Zusammensetzung. In einer besonders bevorzugten Ausführungsform umfasst die härtbare Zusammensetzung im Wesentlichen kein inertes organisches Lösungsmittel und ist somit "lösemittelfrei".

Neben den vorgenannten Bestandteilen kann die härtbare Zusammensetzung die hierfür üblichen Füllstoffe und/oder Additive enthalten.

Geeignete Füllstoffe sind beispielsweise anorganische oder organische partikelförmige Materialien wie beispielsweise Calciumcarbonate und Silikate sowie anorganische Fasermaterialien wie beispielsweise Glasfaser. Auch organische Füllstoffe wie Kohlefaser und Mischungen aus organischen und anorganischen Füllstoffen, wie beispielsweise Mischungen aus Glas- und Kohlefasern oder Mischungen aus Kohlefasern und anorganischen Füllstoffen können Anwendung finden. Die Füllstoffe können in einer Menge von 1 bis 70 Gew.-%, bezogen auf das Gesamtgewicht der Zusammensetzung, zugesetzt werden.

Geeignete herkömmliche Additive umfassen beispielsweise Antioxidantien, UV-Absorber bzw. Lichtstabilisatoren, Metalldeaktivatoren, Antistatika, Verstärkungsstoffe, Füllstoffe, Antifoggingmittel, Treibmittel, Biozide, Weichmacher, Gleitmittel, Emulgatoren, Farbmittel, Pigmente, Rheologiemittel, Schlagzähigkeitsverbesserer, Katalysatoren, Adhäsionsregulatoren, optische Aufheller, Flammschutzmittel, Antitropfmittel, Nukleierungsmittel, Lösungsmittel und Reaktivverdünner sowie Gemische davon.

Die gegebenenfalls verwendeten Lichtstabilisatoren bzw. UV-Absorber, Antioxidantien und Metalldeaktivatoren weisen vorzugsweise eine hohe Migrationsstabilität und Temperaturbeständigkeit auf. Geeignete Lichtstabilisatoren/UV-Absorber und Metalldeaktivatoren sind beispielsweise aus den Gruppen a) bis h) ausgewählt.

a) 4,4-Diarylbutadiene,
b) Zimtsäureester,
c) Benzotriazole,
d) Hydroxybenzophenone,
e) Diphenylcyanacrylate,
f) Oxamide,
g) 2-Phenyl-1,3,5-triazine, und
h) Nickelverbindungen.

Die Verbindungen i) bis s) stellen eine Auswahl geeigneter Stabilisatoren dar.

i) sterisch gehinderte Amine,
j) Metalldesaktivatoren,
k) Phosphite und Phosphonite,
l) Hydroxylamine,
m) Nitrone,
n) Aminoxide,
o) Benzofuranone und Indolinone,
p) Thiosynergisten,
q) Peroxid-zerstörende Verbindungen,
r) Polyamidstabilisatoren, und
s) basische Costabilisatoren.

Die vorliegende Erfindung stellt außerdem ein Verfahren zur Ausbildung eines vernetzten Copolymers, bei dem die Bestandteile E, A und U der Zusammensetzung gemischt und erhitzt werden. Bevorzugt wird das Verfahren so durchgeführt, dass eine erste Komponente, umfassend Bestandteil E, mit einer zweiten Komponente, umfassend Bestandteil A, gemischt und erhitzt wird, wobei die erste und/oder die zweite Komponente Bestandteil U bzw. Teilmengen des Bestandteils U umfassen.

Die Härtung der Zusammensetzung kann durch Erwärmen bewirkt werden. Typischerweise erfolgt die Härtung der erfindungsgemäßen Zusammensetzungen bei Temperaturen im Bereich von -10 bis 200 °C, vorzugsweise im Bereich von -10 bis 180 °C und insbesondere im Bereich von -10 bis 150 °C.

Alternativ kann die Härtung z. B. auch mikrowelleninduziert erfolgen. Insbesondere erfolgt die Härtung bei -10 bis 80 °C und in einer besonders bevorzugten Ausführungsform bei -10 bis 40 °C bzw. bei -10 bis 20 °C. Vorteilhaft ist, dass die Härtung unter normalen Umgebungsbedingungen wie Raumtemperatur und/oder Einwirkung von Sonnenlicht erfolgen kann.

Bei Epoxid-Zusammensetzungen unterscheidet man grundsätzlich zwischen einkomponentigen-(1K) und zweikomponentigen-(2K) Systemen. Bei 2K-Systemen bleiben Epoxidverbindung und Härter bis kurz vor der Härtung getrennt - Epoxidverbindung und Härter sind sehr reaktiv, daher wird der Härter erst kurz vor der Härtung zugesetzt.

Das erfindungsgemäße Verfahren ist insbesondere ein Härtungsverfahren für 2K-Systeme. In dieser Ausführungsform werden das Amin und/oder die Epoxidverbindung getrennt voneinander als erste bzw. zweite Komponente bereits vor der Härtung mit dem Acrylsäureester bzw. Teilmengen des Acrylsäureesters gemischt. Die Mischung der zwei Komponenten erfolgt anschließend.

Die härtbaren Zusammensetzungen eignen sich grundsätzlich für alle Anwendungen, bei denen härtbare 1-Komponenten- oder 2-Komponenten-Epoxid-Formulierungen, insbesondere 2-Komponenten-Epoxid-Formulierungen, üblicherweise eingesetzt werden. Sie eignen sich beispielsweise als Bindemittelbestandteil in Beschichtungs- oder Imprägnierungsmitteln, als Klebstoffe, zur Herstellung von Verbundmaterialien, insbesondere solcher auf Basis von Carbonfasermaterialien oder Glasfasermaterialien, zur Herstellung von Formkörpern oder als Gießmassen, insbesondere als Gießmassen zur Einbettung, Anbindung oder Konsolidierung von Formteilen.

Beschichtungsmittel umfassen beispielsweise Farben. Mit den erfindungsgemäßen härtbaren Zusammensetzungen und mit dem Verfahren der Erfindung ist es insbesondere möglich, kratzfeste Schutzlackbeschichtungen auf beliebigen Substraten aus Metall, Kunststoff oder Holzwerkstoffen aufzubringen.

Da die Reaktivität der Komponenten zueinander vergleichsweise hoch ist, kann das Härten bei niedrigen Temperaturen, wie beispielsweise im Bereich von 0 bis 50 °C und insbesondere im Bereich von 5 bis 35 °C erfolgen. Die Zusammensetzungen sind daher insbesondere geeignet für Substrate mit einer großen Oberfläche, die nicht oder nur schwer auf Temperaturen oberhalb der Umgebungstemperatur erhitzt werden kann.

Dies umfasst insbesondere die Beschichtung von Böden, insbesondere in stark frequentierten Bereichen, wie

sie beispielsweise für die Beschichtung von Verkehrsflächen in öffentlichen Gebäuden oder von Plätzen oder zur Beschichtung von Parkplätzen und zuführenden Verkehrswegen vorkommen. Besonders geeignet sind die erfindungsgemäßen Zusammensetzungen auch für die Beschichtung von großflächigen Metallkomponenten und Metallkonstruktionen, wie beispielsweise in oder an Gebäuden oder Schiffen (marine coating).

Die Zusammensetzungen eignen sich auch als Isolierbeschichtungen in elektronischen Anwendungen, wie einer Isolierbeschichtung für Drähte und Kabel. Ebenfalls können die Zusammensetzungen bei der Herstellung von Photoresists zur Anwendung kommen. Sie eignen sich insbesondere auch als Reparaturlack, beispielsweise bei der Reparatur von Rohren ohne Rohrdemontage ("cure in place pipe (CIPP) rehabilitation"). Sie sind aber auch für die Abdichtung und Beschichtung von Fußböden geeignet.

Die Zusammensetzungen eignen sich auch als Klebstoffe, beispielsweise 2-Komponenten-Montageklebstoffe. Montageklebstoffe dienen zur dauerhaften Verbindungen von Formteilen miteinander. Die Formteile können aus einem beliebigen Material hergestellt sein; beispielsweise Kunststoff, Metall, Holz, Leder oder Keramik. Die Klebstoffe können auch Schmelzklebstoffe sein, die nur bei erhöhten Temperaturen flüssig und verarbeitbar sind. Die Zusammensetzungen können auch als Klebstoffe für Bodenbeläge dienen. Sie sind auch als Klebstoffe für die Herstellung von Leiterplatten (elektronische Schaltungen), beispielsweise mittels des SMT (Surface Mounted Technology)-Verfahrens, geeignet.

Die Zusammensetzungen eignen sich auch zur Herstellung von Verbundmaterialien. Verbundstoffe (oder Verbundwerkstoffe) verbinden verschiedene Materialien, beispielsweise Kunststoffe und Verstärkungsmaterialien (Fasern, Carbonfasern) miteinander.

So eignen sich die Zusammensetzungen beispielsweise zur Herstellung von mit Epoxidverbindungen imprägnierten Fasern oder zur Herstellung von vorimprägnierten aus Fasern hergestellten Garnen und Geweben, wie sie beispielsweise zur Herstellung von Prepregs, die weiter in Verbundstoffen verarbeitet werden, verwendet werden. Herstellungsverfahren für Verbundstoffe umfassen auch Extrusions-, Pultrusions-, Wickel-, resin transfer molding (RTM)- und Harzinfusion (RI)-Verfahren. Insbesondere können die Fasern und / oder die Garne und Gewebe aus diesen Verfahren mit der erfindungsgemäßen Zusammensetzung imprägniert und danach bei erhöhter Temperatur ausgehärtet werden.

Als Gießmassen zur Einbettung, Anbindung oder Konsolidierung von Formteilen können die Zusammensetzungen beispielsweise in elektronischen Anwendungen verwendet werden.

Das Verfahren der Erfindung eignet sich auch als Verfahren zur Beschichtung von Oberflächen, umfassend das Aufbringen der härtbaren Zusammensetzung auf die zu beschichtende Oberfläche, und Härten dieser darauf. In Bezug auf die zu beschichtende Oberfläche unterliegt dieses Beschichtungsverfahren keinen Beschränkungen. Beispiele für geeignete Oberflächen sind Metalloberflächen, Holzoberflächen, Glasflächen und Kunststoffoberflächen.

## Beispiele

Hansen-Löslichkeitsparameter wurden mit der Modellier-Software HSPIP 3.1.25 (3rd Edition), entwickelt und vertrieben von C. M. Hansen, berechnet. Tabelle 1 gibt die in den Beispielen relevanten Hansen-Löslichkeitsparameter und die daraus berechneten Werte für $\Phi_1$ und $\Phi_2$ an.

Tabelle 1

| | $\delta_d$ | $\delta_p$ | $\delta_h$ | $\Phi_1$ | $\Phi_2$ |
|---|---|---|---|---|---|
| Bisphenol-A-diglycidylether | 19,4 | 5,7 | 5,9 | - | - |
| Isophorondiamin | 16,5 | 5,4 | 8,1 | - | - |
| Benzylalkohol | 19,3 | 6,4 | 12,6 | - | - |
| n-Butylacrylat | 15,7 | 5,0 | 6,0 | 0,71 | -1,92 |
| 4-Hydroxybutylacrylat | 16,2 | 12,5 | 14,1 | 10,65 | 9,11 |
| Hydroxyethylcaprolactonacrylat | 16,6 | 10,5 | 10,0 | 6,31 | 4,77 |
| Ethyldiglycolacrylat | 16,0 | 6,3 | 8,7 | 2,86 | 1,01 |

### Vergleichsbeispiel 1

Bisphenol-A-diglycidylether (14,0 g), Isophorondiamin (3,5 g) und Benzylalkohol (2,0 g) wurden gemischt und flach ausgestrichen in einem Schälchen (Durchmesser: 5 cm) 2 h bei 80 °C im Vakuumtrockenschrank erhitzt. Die Glasübergangstemperatur $T_g$ des erhaltenen Materials betrug 94 °C.

0,1 g des Materials wurden über Nacht in deuteriertem DMSO gelagert (ca. 0,05 g/mL) und anschließend

abfiltriert. Im Filtrat konnte Benzylalkohol mittels $^1$H-NMR-Spektroskopie nachgewiesen werden.

Es ist ersichtlich, dass Benzylalkohol aus dem Material herausgelöst wurde.

Beispiel 1

Bisphenol-A-diglycidylether (14,0 g), Isophorondiamin (3,5g) und 4-Hydroxybutylacrylat (2,0 g) wurden gemischt und flach ausgestrichen in einem Schälchen (Durchmesser: 5 cm) 2 h bei 80 °C im Vakuumtrockenschrank erhitzt. Die Glasübergangstemperatur $T_g$ des erhaltenen Materials betrug 93 °C. Dieser Wert ist nahezu identisch mit dem im Vergleichsbeispiel 1 erhaltenen $T_g$-Wert.

0,1 g des Materials wurden über Nacht in deuteriertem DMSO gelagert (ca. 0,05 g/mL) und anschließend abfiltriert. Im Filtrat konnte mittels $^1$H-NMR-Spektroskopie kein 4-Hydroxybutylacrylat nachgewiesen werden.

Aus dem Vergleich von Beispiel 1 mit Vergleichsbeispiel 1ist ersichtlich, dass die Verwendung von 4-Hydroxybutylacrylat anstelle von Benzylalkohol keinen signifikanten Einfluss auf die Materialeigenschaften der gehärteten Zusammensetzung hat. Es ist außerdem ersichtlich, dass die Verwendung von 4-Hydroxybutylacrylat als Reaktivverdünner kein nachträgliches Auslösen des Verdünnungsmittels mit sich bringt.

Vergleichsbeispiel 2

Bisphenol-A-diglycidylether (14,0 g), Isophorondiamin (3,5 g) und Benzylalkohol (1,5 g) wurden gemischt und flach ausgestrichen in einem Schälchen (Durchmesser: 5 cm) 2 h bei 80 °C im Vakuumtrockenschrank erhitzt. Die Glasübergangstemperatur $T_g$ des erhaltenen Materials betrug 99 °C.

0,1 g des Materials wurden über Nacht in deuteriertem DMSO gelagert (ca. 0,05 g/mL) und anschließend abfiltriert. Im Filtrat konnte Benzylalkohol mittels $^1$H-NMR-Spektroskopie nachgewiesen werden.

Beispiel 2

Bisphenol-A-diglycidylether (14,0 g), Isophorondiamin (3,5g) und 4-Hydroxybutylacrylat (1,5 g) wurden gemischt und flach ausgestrichen in einem Schälchen (Durchmesser: 5 cm) 2 h bei 80 °C im Vakuumtrockenschrank erhitzt. Die Glasübergangstemperatur $T_g$ des erhaltenen Materials betrug 102 °C.

0,1 g des Materials wurden über Nacht in deuteriertem DMSO gelagert (ca. 0,05 g/mL) und anschließend abfiltriert. Im Filtrat konnte mittels $^1$H-NMR-Spektroskopie kein 4-Hydroxybutylacrylat nachgewiesen werden.

Beispiel 3

Bisphenol-A-diglycidylether (14,0 g), Isophorondiamin (4,0 g) und 4-Hydroxybutylacrylat (1,5 g) wurden gemischt und flach ausgestrichen in einem Schälchen (Durchmesser: 5 cm) 2 h bei 80 °C im Vakuumtrockenschrank erhitzt. Die Glasübergangstemperatur $T_g$ des erhaltenen Materials betrug 106 °C.

0,1 g des Materials wurden über Nacht in deuteriertem DMSO gelagert (ca. 0,05 g/mL) und anschließend abfiltriert. Im Filtrat konnte mittels $^1$H-NMR-Spektroskopie kein 4-Hydroxybutylacrylat nachgewiesen werden.

Vergleichsbeispiel 3

Isophorondiamin (3,5 g) und 4-Hydroxybutylacrylat (2,0 g) wurden gemischt und flach ausgestrichen in einem Schälchen (Durchmesser: 5 cm) 2 h bei 80 °C im Vakuumtrockenschrank erhitzt.

Eine Analyse des Materials mittels $^1$H-NMR-Spektroskopie zeigte, dass das 4-Hydroxybutyalcrylat mit dem im Überschuss vorliegenden Isophorondiamin vollständig umgesetzt wurde. Das $^1$H-NMR-Spektrum wies auf eine Michael-Addition des Amins an die Doppelbindung des 4-Hydroxybutylacrylats hin.

Vergleichsbeispiel 4

Bisphenol-A-diglycidylether (14,0 g) und 4-Hydroxybutylacrylat (2,0 g) wurden gemischt und flach ausgestrichen in einem Schälchen (Durchmesser: 5 cm) 2 h bei 80 °C im Vakuumtrockenschrank erhitzt.

Eine Analyse des Materials mittels 1 H-NMR-Spektroskopie ergab keine Hinweise auf eine Reaktion zwischen Bisphenol-A-diglycidylether und 4-Hydroxybutylacrylat.

Aus dem Vergleich von Vergleichsbeispiel 4 mit Vergleichsbeispiel 3 ist ersichtlich, dass der in Beispiel 1 beschriebene Vorteil der Verwendung von 4-Hydroxybutylacrylat gegenüber Benzylalkohol vermutlich auf einer kovalenten Reaktion des 4-Hydroxybutylacrylats mit dem Isophorondiamin beruht.

Vergleichsbeispiel 5

Bisphenol-A-diglycidylether (14,0 g), Isophorondiamin (3,5 g) und Benzylalkohol (1,5 g) wurden gemischt und die thermische Kinetik per Dynamische-Differenzkalorimetrie (DSC)-Messung bestimmt. Die Heizrate betrug 5 K / min über einen Temperaturbereich von Raumtemperatur bis 250 °C.
Ergebnis:

Onset: 55,5 °C
Exothermie: 428,2 J/g
Peak Maximum: 92,4 °C

Beispiel 4

Bisphenol-A-diglycidylether (14,0 g), Isophorondiamin (3,5g) und 4-Hydroxybutylacrylat (1,5 g) wurden gemischt und die thermische Kinetik per Dynamische-Differenzkalorimetrie (DSC)-Messung bestimmt. Die Heizrate betrug 5 K/ min über einen Temperaturbereich von Raumtemperatur bis 250 °C.
Ergebnis:

Onset: 57,9 °C
Exothermie: 402,4 J/g
Peak Maximum: 96,4 °C

Aus dem Vergleich von Beispiel 4 mit Vergleichsbeispiel 5 ist ersichtlich, dass die Verwendung von 4-Hydroxybutylacrylat anstelle von Benzylalkohol keinen erheblichen Einfluss auf die thermische Kinetik des Gemischs hat.

Vergleichsbeispiel 6

Bisphenol-A-diglycidylether (14,0 g), Isophorondiamin (3,5 g) und Benzylalkohol (1,5 g) wurden gemischt und mittels eines Platte/Platte (25 mm)-Viskosimeters (MCR302, Anton Paar) mit einer Spaltweite von 1 mm und einer Scherrate von 100 $s^{-1}$ die Viskosität bei 40 °C in Abhängigkeit von der Zeit bestimmt. Die Viskosität betrug anfangs 280 mPas. Die Ergebnisse sind in Tabelle 2 aufgeführt.

Beispiel 5

Bisphenol-A-diglycidylether (14,0 g), Isophorondiamin (3,5g) und 4-Hydroxybutylacrylat (1,5 g) wurden und mittels eines Platte/Platte (25 mm)-Viskosimeters (MCR302, Anton Paar) mit einer Spaltweite von 1 mm und einer Scherrate von 100 $s^{-1}$ die Viskosität bei 40 °C in Abhängigkeit von der Zeit bestimmt. Die Viskosität betrug anfangs 290 mPas. Die Ergebnisse sind in Tabelle 2 aufgeführt.

Tabelle 2

| | 500 mPa·s | 1.000 mPa·s | 5.000 mPa·s | 10.000 mPa·s |
|---|---|---|---|---|
| Vergleichsbeispiel 5 | 13,0 min | 22,7 min | 41,9 min | 49,4 min |
| Beispiel 5 | 11,5 min | 22,3 min | 46,1 min | 55,8 min |

Aus dem Vergleich von Beispiel 5 mit Vergleichsbeispiel 6 ist ersichtlich, dass auch die rheologischen Eigenschaften des Polymers durch die Verwendung von 4-Hydroxybutylacrylat anstelle von Benzylalkohol nicht wesentlich beeinflusst werden.

Vergleichsbeispiel 7

Bisphenol-A-diglycidylether (14,0 g), Isophorondiamin (3,5 g) und Benzylalkohol (1,5 g) wurden gemischt und mittels eines Platte/Platte (25 mm)-Viskosimeters (MCR302, Anton Paar) mit einer Spaltweite von 1 mm und einer Scherrate von 100 $s^{-1}$ die Zeit bei 75 °C bestimmt, die benötigt wurde, um das maximale Verlustmodul $G''_{max}$ zu erreichen. Dieser Wert entspricht der minimalen Aushärtungszeit. Die Ergebnisse sind in Tabelle 3 aufgeführt.

Beispiel 6

Bisphenol-A-diglycidylether (14,0 g), Isophorondiamin (3,5g) und 4-Hydroxybutylacrylat (1,5 g) wurden gemischt und mittels eines Platte/Platte (25 mm)-Viskosimeters (MCR302, Anton Paar) mit einer Spaltweite von 1 mm und einer Scherrate von 100 $s^{-1}$ die Zeit bei 75 °C bestimmt, die benötigt wurde, um das maximale Verlustmodul $G''_{max}$ zu erreichen. Dieser Wert entspricht der minimalen Aushärtungszeit. Die Ergebnisse sind in Tabelle 3 aufgeführt.

Beispiel 7

Bisphenol-A-diglycidylether (14,0 g), Isophorondiamin (4,0 g) und 4-Hydroxybutylacrylat (1,5 g) wurden gemischt und mittels eines Platte/Platte (25 mm)-Viskosimeters (MCR302, Anton Paar) mit einer Spaltweite von 1 mm und einer Scherrate von 100 $_{s}{}^{-1}$ die Zeit bei 75 °C bestimmt, die benötigt wurde, um das maximale Verlustmodul $G''_{max}$ zu erreichen. Dieser Wert entspricht der minimalen Aushärtungszeit. Die Ergebnisse sind in Tabelle 3 aufgeführt.

Tabelle 3

| | $G''_{max}$ (75 °C) |
|---|---|
| Vergleichsbeispiel 7 | 54,8 min |
| Beispiel 6 | 68,4 min |
| Beispiel 7 | 48,6 min |

Aus dem Vergleich von Beispiel 6, Beispiel 7 und Vergleichsbeispiel 7 ist ersichtlich, dass die Verwendung von Acrylsäureester anstatt Benzylalkohol in gleicher Menge keinen erheblichen Einfluss auf die Aushärtungszeit hat.

Beispiel 8-1, Beispiel 8-2 und Vergleichsbeispiel 8

Bisphenol-A-diglycidylether (14,0 g), Isophorondiamin (3,5 g) und der jeweils in Tabelle 3 aufgeführte Verdünner (2,0 g) wurden gemischt und flach ausgestrichen in einem Schälchen (Durchmesser: 5 cm) 2 h bei 80 °C im Vakuumtrockenschrank erhitzt. Die jeweilige Glasübergangstemperatur $T_g$ des erhaltenen Materials ist in Tabelle 4 aufgeführt.

0,1 g des Materials wurden über Nacht in deuteriertem DMSO gelagert (ca. 0,05 g/mL) und anschließend abfiltriert. Das Filtrat wurde mittels $^{1}$H-NMR-Spektroskopie auf die Anwesenheit des jeweiligen Verdünners untersucht. Die Ergebnisse sind in Tabelle 4 aufgeführt.

Tabelle 4

| # | Verdünner | $T_g$ | Verdünner ausgelöst |
|---|---|---|---|
| Vergleichsbeispiel 1 | Benzylalkohol | 94 °C | ja |
| Beispiel 1 | 4-Hydroxybutylacrylat | 93 °C | nein |
| Beispiel 8-1 | Ethyldiglycolacrylat | 85 °C | nein |
| Beispiel 8-2 | Hydroxyethylcaprolactonacrylat | 90 °C | nein |
| Vergleichsbeispiel 8 | n-Butylacrylat | 76 °C | ja |

Es ist ersichtlich, dass die Verwendung verschiedener Acrylsäureester, die den erfindungsgemäßen Bedingungen genügen, anstelle von Benzylalkohol keinen erheblichen Einfluss auf die Materialeigenschaften der gehärteten Zusammensetzung hat. Es ist außerdem ersichtlich, dass die Verwendung verschiedener Acrylsäureester, die den erfindungsgemäßen Bedingungen genügen, kein nachträgliches Auslösen des Verdünnungsmittels mit sich bringt, was gegenüber dem gängigen, nicht-reaktiven Lösemittel Benzylalkohol einen Vorteil darstellt.

Bei Vergleichsbeispiel 8 wurde ein Auslösen des n-Butylacrylats beobachtet. Isophorondiamin scheint eher mit dem Bisphenol-A-diglycidylether als mit n-Butylacrylat zu reagieren.

Vergleichsbeispiel 9

Isophorondiamin (3,5 g) und Ethyldiglycolacrylat (2,0 g) wurden gemischt und flach ausgestrichen in einem Schälchen (Durchmesser: 5 cm) 2 h bei 80 °C im Vakuumtrockenschrank erhitzt.

Eine Analyse des Materials mittels $^1$H-NMR-Spektroskopie zeigte, dass das Ethyldiglycolacrylat mit dem im Überschuss vorliegenden Isophorondiamin vollständig umgesetzt wurde. Das $^1$H-NMR-Spektrum wies auf eine Michael-Addition des Amins an die Doppelbindung des Ethyldiglycolacrylats hin.

Aus Vergleichsbeispiel 9 ist ersichtlich, dass der in Beispiel 8-1 beschriebene Vorteil der Verwendung von Ethyldiglycolacrylat gegenüber Benzylalkohol vermutlich auf einer kovalenten Reaktion des Ethyldiglycolacrylats mit dem Isophorondiamin beruht.

Vergleichsbeispiel 10

Isophorondiamin (3,5 g) und Hydroxyethylcaprolactonacrylat (2,0 g) wurden gemischt und flach ausgestrichen in einem Schälchen (Durchmesser: 5 cm) 2 h bei 80 °C im Vakuumtrockenschrank erhitzt.

Eine Analyse des Materials mittels $^1$H-NMR-Spektroskopie zeigte, dass das Hydroxyethylcaprolactonacrylat mit dem im Überschuss vorliegenden Isophorondiamin vollständig umgesetzt wurde. Das $^1$H-NMR-Spektrum wies auf eine Michael-Addition des Amins an die Doppelbindung des Hydroxyethylcaprolactonacrylats hin.

Aus Vergleichsbeispiel 10 ist ersichtlich, dass der in Beispiel 8-2 beschriebene Vorteil der Verwendung von Hydroxyethylcaprolactonacrylat gegenüber Benzylalkohol vermutlich auf einer kovalenten Reaktion des Hydroxyethylcaprolactonacrylats mit dem Isophorondiamin beruht.

Vergleichsbeispiel 11

Isophorondiamin (3,5 g) und n-Butylacrylat (2,0 g) wurden gemischt und flach ausgestrichen in einem Schälchen (Durchmesser: 5 cm) 2 h bei 80 °C im Vakuumtrockenschrank erhitzt.

Eine Analyse des Materials mittels $^1$H-NMR-Spektroskopie zeigte, dass das n-Butylacrylat mit dem im Überschuss vorliegenden Isophorondiamin vollständig umgesetzt wurde. Das $^1$H-NMR-Spektrum wies auf eine Michael-Addition des Amins an die Doppelbindung des n-Butylacrylats hin.

Aus Vergleichsbeispiel 11 ist ersichtlich, dass n-Butylacrylat in der Lage ist, in einer Michael-Addition mit einem Amin zu reagieren. Dieses Ergebnis stützt die im Zusammenhang mit Vergleichsbeispiel 8 aufgestellte Vermutung, dass Isophorondiamin eher mit dem Bisphenol-A-diglycidylether als mit n-Butylacrylat reagiert.

Vergleichsbeispiel 12

Bisphenol-A-diglycidylether (14,0 g) und Ethyldiglycolacrylat (2,0 g) wurden gemischt und flach ausgestrichen in einem Schälchen (Durchmesser: 5 cm) 2 h bei 80 °C im Vakuumtrockenschrank erhitzt.

Eine Analyse des Materials mittels $^1$H-NMR-Spektroskopie ergab keine Hinweise auf eine Reaktion zwischen Bisphenol-A-diglycidylether und Ethyldiglycolacrylat.

Aus Vergleichsbeispiel 12 ist ersichtlich, dass der in Beispiel 4-1 beschriebene Vorteil der Verwendung von Ethyldiglycolacrylat gegenüber Benzylalkohol vermutlich auf einer kovalenten Reaktion des Ethyldiglycolacrylats mit dem Isophorondiamin beruht.

Vergleichsbeispiel 13

Bisphenol-A-diglycidylether (14,0 g) und Hydroxyethylcaprolactonacrylat (2,0 g) wurden gemischt und flach ausgestrichen in einem Schälchen (Durchmesser: 5 cm) 2 h bei 80 °C im Vakuumtrockenschrank erhitzt.

Eine Analyse des Materials mittels $^1$H-NMR-Spektroskopie ergab keine Hinweise auf eine Reaktion zwischen Bisphenol-A-diglycidylether und Hydroxyethylcaprolactonacrylat.

Aus Vergleichsbeispiel 13 ist ersichtlich, dass der in Beispiel 4-2 beschriebene Vorteil der Verwendung von Hydroxyethylcaprolactonacrylat gegenüber Benzylalkohol vermutlich auf einer kovalenten Reaktion des Hydroxyethylcaprolactonacrylats mit dem Isophorondiamin beruht.

Vergleichsbeispiel 14

Bisphenol-A-diglycidylether (14,0 g) und n-Butylacrylat (2,0 g) wurden gemischt und flach ausgestrichen in einem Schälchen (Durchmesser: 5 cm) 2 h bei 80 °C im Vakuumtrockenschrank erhitzt.

Eine Analyse des Materials mittels $^1$H-NMR-Spektroskopie ergab keine Hinweise auf eine Reaktion zwischen Bisphenol-A-diglycidylether und n-Butylacrylat.

Vergleichsbeispiel 15

Bisphenol-A-diglycidylether (14,0 g), Isophorondiamin (3,5 g) und n-Butylacrylat (1,5 g) wurden gemischt und flach ausgestrichen in einem Schälchen (Durchmesser: 5 cm) 2 h bei 80 °C im Vakuumtrockenschrank erhitzt.
0,1 g des Materials wurden über Nacht in deuteriertem DMSO gelagert (ca. 0,05 g/mL) und anschließend abfiltriert. Im Filtrat konnte mittels $^{1}$H-NMR-Spektroskopie n-Butylacrylat nachgewiesen werden.

Vergleichsbeispiel 16

Bisphenol-A-diglycidylether (14,0 g), Isophorondiamin (4,0 g) und n-Butylacrylat (1,5 g) wurden gemischt und flach ausgestrichen in einem Schälchen (Durchmesser: 5 cm) 2 h bei 80 °C im Vakuumtrockenschrank erhitzt.
0,1 g des Materials wurden über Nacht in deuteriertem DMSO gelagert (ca. 0,05 g/mL) und anschließend abfiltriert. Im Filtrat konnte mittels $^{1}$H-NMR-Spektroskopie n-Butylacrylat nachgewiesen werden.
Aus den Vergleichsbeispielen 15 und 16 ist gegenüber Vergleichsbeispiel 8 ersichtlich, dass es auch bei größeren Mengen an Amin zu einer ungenügenden kovalenten Einbindung des n-Butylacrylats während der Aushärtung der Zusammensetzung kommt.
Es ist ersichtlich, dass die Verwendung der erfindungsgemäßen härtbaren Zusammensetzung anstelle von härtbaren Zusammensetzungen, welche Verdünner wie Benzylalkohol oder n-Butylacrylat enthalten, eine kovalente Einbindung des Acrylsäureesters bei der Aushärtung der Zusammensetzung erlaubt.

## Patentansprüche

1. Härtbare Zusammensetzung, umfassend:

   a) wenigstens eine Epoxidverbindung E mit mindestens zwei Epoxidgruppen;
   b) wenigstens ein Amin A mit mindestens zwei Aminwasserstoffen; und
   c) wenigstens einen Acrylsäureester U;

   **dadurch gekennzeichnet, dass** die Epoxidverbindung E wenigstens eine Epoxidverbindung E', das Amin A wenigstens ein Amin A' und der Acrylsäureester U wenigstens einen monofunktionellen Acrylsäureester U' umfassen, deren Hansen-Löslichkeitsparameter bei 23°C für die Dipolkräfte $\delta_p$ und für die spezifischen Interaktionen $\delta_h$ folgenden Bedingungen genügen:

$$\sqrt{(\delta_{p(U')} - \delta_{p(E')})^2 + (\delta_{h(U')} - \delta_{h(E')})^2} \geq 1{,}5$$

   und

$$\sqrt{({\delta_{p(U')}}^2 + {\delta_{h(U')}}^2)} - \sqrt{({\delta_{p(A')}}^2 + {\delta_{h(A')}}^2)} \geq \quad 0,$$

   wobei der Begriff "mnofunktionell" derart zu verstehen ist, dass der Acrylsäureester nur eine Acrylatgruppe (H2C=CH-COO-) aufweist.

2. Härtbare Zusammensetzung gemäß einem der Ansprüche 1, wobei das Verhältnis der Stoffmenge der Epoxidgruppen und Acrylsäureestergruppen zur Stoffmenge von Aminwasserstoffen im Bereich von 0,05 bis 2,0 liegt.

3. Härtbare Zusammensetzung gemäß Anspruch 2, wobei das Verhältnis der Stoffmenge der Epoxidgruppen und Acrylsäureestergruppen zur Stoffmenge von Aminwasserstoffen im Bereich von 0,1 bis 1,0 liegt.

4. Härtbare Zusammensetzung gemäß einem der vorhergehenden Ansprüche, wobei die Epoxidverbindung E' ausgewählt ist unter Glycidylethern, Glycidylestern, Divinylarendioxiden und epoxidgruppenhaltigen Polyacrylatharzen.

5. Härtbare Zusammensetzung gemäß Anspruch 4, wobei die Epoxidverbindung E' ausgewählt ist unter aromatischen, aliphatischen und cycloaliphatischen Glycidylethern.

**6.** Härtbare Zusammensetzung gemäß Anspruch 5, wobei die Epoxidverbindung E' ausgewählt ist unter aromatischen Glycidylethern.

**7.** Härtbare Zusammensetzung gemäß Anspruch 6, wobei die Epoxidverbindung E' Bisphenol-A-diglycidylether ist.

**8.** Härtbare Zusammensetzung gemäß einem der vorhergehenden Ansprüche, wobei das Amin A' ausgewählt ist unter aromatischen, aliphatischen oder cycloaliphatischen Aminen, welche mindestens zwei Aminogruppen, welche primär und/oder sekundär sind, aufweisen.

**9.** Härtbare Zusammensetzung gemäß Anspruch 8, wobei das Amin A' ein cycloaliphatisches Diamin, insbesondere Isophorondiamin, ist.

**10.** Härtbare Zusammensetzung gemäß einem der vorhergehenden Ansprüche, wobei der monofunktionelle Acrylsäureester U' mindestens eine Hydroxylgruppe, mindestens eine Ethergruppe, mindestens eine Alkyloxylcarbonylgruppe, mindestens eine Amidgruppe und/oder mindestens eine Amingruppe umfasst.

**11.** Härtbare Zusammensetzung gemäß Anspruch 10, wobei der monofunktionelle Acrylsäureester U' ausgewählt ist unter Hydroxyalkylacrylsäureestern, Alkylesteracrylsäureestern, Hydroxyalkylesteracrylsäureestern und Polyalkyletheracrylsäureestern.

**12.** Härtbare Zusammensetzung gemäß Anspruch 11, wobei der monofunktionelle Acrylsäureester U' ausgewählt ist unter 4-Hydroxybutylacrylat, Hydroxyethylcaprolactonacrylat und Ethyldiglycolacrylat.

**13.** Härtbare Zusammensetzung gemäß einem der vorhergehenden Ansprüche, wobei die Zusammensetzung weniger als 10 Gew.-% inerte organische Lösungsmittel enthält.

**14.** Verfahren zur Aushärtung einer Zusammensetzung gemäß einem der vorhergehenden Ansprüche, wobei die Bestandteile der Zusammensetzung gemischt und erhitzt werden.

## Claims

**1.** A curable composition comprising:

a) at least one epoxide compound E having at least two epoxide groups;
b) at least one amine A having at least two amine hydrogens; and
c) at least one acrylic ester U;

wherein the epoxide compound E comprises at least one epoxide compound E', the amine A comprises at least one amine A', and the acrylic ester U comprises at least one monofunctional acrylic ester U' whose Hansen solubility parameters at 23°C for the dipole forces $\delta_\rho$ and for the specific interactions $\delta_h$ satisfy the following conditions:

$$\sqrt{(\delta_{p(U')} - \delta_{p(E')})^2 + (\delta_{h(U')} - \delta_{h(E')})^2} \geq 1.5$$

and

$$\sqrt{({\delta_{p(U')}}^2 + {\delta_{h(U')}}^2)} - \sqrt{({\delta_{p(A')}}^2 + {\delta_{h(A')}}^2)} \geq 0,$$

where the term "monofunctional" is understood to mean that the acrylic ester has only one acrylate group (H2C=CH-COO-).

**2.** The curable composition according to claim 1, the ratio of the amount of substance of the epoxide groups and acrylic ester groups to the amount of substance of amine hydrogens being in the range from 0.05 to 2.0.

3. The curable composition according to claim 2, the ratio of the amount of substance of the epoxide groups and acrylic ester groups to the amount of substance of amine hydrogens being in the range from 0.1 to 1.0.

4. The curable composition according to any of the preceding claims, the epoxide compound E' being selected from glycidyl ethers, glycidyl esters, divinylarene dioxides, and polyacrylate resins containing epoxide groups.

5. The curable composition according to claim 4, the epoxide compound E' being selected from aromatic, aliphatic, and cycloaliphatic glycidyl ethers.

6. The curable composition according to claim 5, the epoxide compound E' being selected from aromatic glycidyl ethers.

7. The curable composition according to claim 6, the epoxide compound E' being bisphenol A diglycidyl ether.

8. The curable composition according to any of the preceding claims, the amine A' being selected from aromatic, aliphatic, or cycloaliphatic amines which have at least two amino groups which are primary and/or secondary.

9. The curable composition according to claim 8, the amine A' being a cycloaliphatic diamine, more particularly isophoronediamine.

10. The curable composition according to any of the preceding claims, the monofunctional acrylic ester U' comprising at least one hydroxyl group, at least one ether group, at least one alkyloxylcarbonyl group, at least one amide group and/or at least one amine group.

11. The curable composition according to claim 10, the monofunctional acrylic ester U' being selected from hydroxyalkyl acrylic esters, alkyl ester acrylic esters, hydroxyalkyl ester acrylic esters, and polyalkyl ether acrylic esters.

12. The curable composition according to claim 11, the monofunctional acrylic ester U' being selected from 4-hydroxybutyl acrylate, hydroxyethylcaprolactone acrylate, and ethyl diglycol acrylate.

13. The curable composition according to any of the preceding claims, the composition comprising less than 10 wt% of inert organic solvents.

14. A method for curing a composition according to any of the preceding claims, the constituents of the composition being mixed and heated.

## Revendications

1. Composition durcissable, comprenant :

   a) au moins un composé époxyde E comportant au moins deux groupes époxyde ;
   b) au moins une amine A comportant au moins deux atomes d'hydrogène en fonction amine ; et
   c) au moins un ester d'acide acrylique U ;

   **caractérisée en ce que** le composé époxyde E comprend au moins un composé époxyde E', l'amine A comprend au moins une amine A' et l'ester d'acide acrylique U comprend au moins un ester d'acide acrylique monofonctionnel U', dont les paramètres de solubilité Hansen à 23 °C pour les forces dipolaires $\delta_p$ et pour les interactions spécifiques $\delta_h$ remplissent les conditions suivantes :

$$\sqrt{(\delta_{p(U')} - \delta_{p(E')})^2 + (\delta_{h(U')} - \delta_{h(E')})^2} \geq 1{,}5$$

   et

$$\sqrt{(\delta_{p(U')}{}^2 + \delta_{h(U')}{}^2)} - \sqrt{(\delta_{p(A')}{}^2 + \delta_{h(A')}{}^2)} \geq 0,$$

Le terme « monofonctionnel » devant être entendu comme signifiant que l'ester d'acide acrylique ne comporte qu'un groupe acrylate ($H_2C$=CH-COO-).

2. Composition durcissable selon la revendication 1, dans laquelle le rapport de la quantité de substance des groupes époxyde et des groupes ester d'acide acrylique à la quantité de substance d'atomes hydrogène en fonction amine se situe dans la plage de 0,05 à 2,0.

3. Composition durcissable selon la revendication 2, dans laquelle le rapport de la quantité de substance des groupes époxyde et des groupes ester d'acide acrylique à la quantité de substance d'atomes hydrogène en fonction amine se situe dans la plage de 0,1 à 1,0.

4. Composition durcissable selon l'une quelconque des revendications précédentes, dans laquelle le composé époxyde E' est choisi parmi les éthers glycidyliques, les esters glycidyliques, les dioxydes de divinylarène et les résines polyacrylate contenant des groupes époxyde.

5. Composition durcissable selon la revendication 4, dans laquelle le composé époxyde E' est choisi parmi les éthers glycidyliques aromatiques, aliphatiques et cycloaliphatiques.

6. Composition durcissable selon la revendication 5, dans laquelle le composé époxyde E' est choisi parmi les éthers glycidyliques aromatiques.

7. Composition durcissable selon la revendication 6, dans laquelle le composé époxyde E' est l'éther diglycidylique de bisphénol A.

8. Composition durcissable selon l'une quelconque des revendications précédentes, dans laquelle l'amine A' est choisie parmi les amines aromatiques, aliphatiques ou cycloaliphatiques, qui comportent au moins deux groupes amino qui sont primaires et/ou secondaires.

9. Composition durcissable selon la revendication 8, dans laquelle l'amine A' est une diamine cycloaliphatique, en particulier l'isophoronediamine.

10. Composition durcissable selon l'une quelconque des revendications précédentes, dans laquelle l'ester d'acide acrylique monofonctionnel U' comprend au moins un groupe hydroxy, au moins un groupe éther, au moins un groupe alkyloxycarbonyle, au moins un groupe amido et/ou au moins un groupe amino.

11. Composition durcissable selon la revendication 10, dans laquelle l'ester d'acide acrylique monofonctionnel U' est choisi parmi les acrylates d'hydroxyalkyle, les acrylates d'esters alkyliques, les acrylates d'esters hydroxyalkyliques et les acrylates de polyalkyléthers.

12. Composition durcissable selon la revendication 11, dans laquelle l'ester d'acide acrylique monofonctionnel U' est choisi parmi l'acrylate de 4-hydroxybutyle, l'acrylate d'hydroxyéthylcaprolactone et l'acrylate d'éthyldiglycol.

13. Composition durcissable selon l'une quelconque des revendications précédentes, dans laquelle la composition contient moins de 10 % en poids de solvants organiques inertes.

14. Procédé pour le durcissement d'une composition selon l'une quelconque des revendications précédentes, dans lequel on mélange et fait durcir les composants de la composition.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0211978 A1
- WO 2012148815 A1
- US 4835241 A
- US 4051195 A
- EP 0355288 A2
- EP 299420 A
- DE 2214650 B
- DE 2749576 B
- US 4091048 A
- US 3781379 A


### In der Beschreibung aufgeführte Nicht-Patentliteratur


- **C. M. HANSEN.** The three dimensional solubility parameters. *J. Paint Technol.,* 1967, vol. 39, 105
- **C. M. HANSEN.** Hansen Solubility Parameters: A User's Handbook. 2007